# EUROPEAN PATENT SPECIFICATION

(11) **EP 4 469 840 B1**
(45) Date of publication and mention of the grant of the patent: **07.10.2026**
(21) Application number: 23708351.4
(22) Date of filing: 25.01.2023
(51) Int. Cl.: G01V 20/00

(54) **SYSTEM AND METHOD FOR PORO-ELASTIC MODELING AND MICROSEISMIC DEPLETION DELINEATION**
SYSTEM UND VERFAHREN ZUR POROELASTISCHEN MODELLIERUNG UND MIKROSEISMISCHEN ABREICHERUNGSABGRENZUNG
SYSTÈME ET PROCÉDÉ DE MODÉLISATION PORO-ÉLASTIQUE ET DE DÉLIMITATION DE DÉPLÉTION MICROSISMIQUE

(30) Priority: 25.01.2022 US 202263302971 P
(43) Date of publication of application: 04.12.2024
(73) Proprietor: Chevron U.S.A. Inc., San Ramon, CA 94583 (US); Chevron Canada Limited, Calgary, AB T2P 0L7 (CA)
(72) Inventor: SHABELANSKY, Andrey H., San Ramon, California 94583-0806 (US); NIHEI, Kurt T., San Ramon, California 94583-0806 (US); BEVC, Dimitri, San Ramon, California 94583-0806 (US); FRADELIZIO, Gian Luigi, Calgary, Alberta T2P 0L7 (CA); TRACEY, Sinead M., Calgary, Alberta T2P 0L7 (CA)
(74) Representative: Haseltine Lake Kempner LLP
(86) International application number: PCT/US2023/061265
(87) International publication number: WO 2023/147357

(56) References cited:
- US-A1- 2020 284 945
- WENZLAU F ET AL: "Finite-difference modeling of wave propagation and diffusion in poroelastic media", GEOPHYSICS, SOCIETY OF EXPLORATION GEOPHYSICISTS, US, vol. 74, no. 4, 1 July 2009 (2009-07-01), pages T55 - T66, XP001523689, ISSN: 0016-8033, DOI: 10.1190/1.3122928
- MASSON Y J ET AL: "Finite-difference modeling of Biot's poroelastic equations across all frequencies", GEOPHYSICS, SOCIETY OF EXPLORATION GEOPHYSICISTS, US, vol. 75, no. 2, 1 March 2010 (2010-03-01), pages N33 - N41, XP001553275, ISSN: 0016-8033, DOI: 10.1190/1.3332589
- SOBHANIARAGH B ET AL: "Three-dimensional investigation of multiple stage hydraulic fracturing in unconventional reservoirs", JOURNAL OF PETROLEUM SCIENCE AND ENGINEERING, ELSEVIER, AMSTERDAM, NL, vol. 146, 9 July 2016 (2016-07-09), pages 1063 - 1078, XP029735001, ISSN: 0920-4105, DOI: 10.1016/J.PETROL.2016.07.019
- KAMALI AMIRHOSSEIN ET AL: "On the Role of Poroelasticity in the Propagation Mode of Natural Fractures in Reservoir Rocks", ROCK MECHANICS AND ROCK ENGINEERING, SPRINGER VIENNA, VIENNA, vol. 53, no. 5, 4 February 2020 (2020-02-04), pages 2419 - 2438, XP037129806, ISSN: 0723-2632, [retrieved on 20200204], DOI: 10.1007/S00603-019-02017-X

## Description

### TECHNICAL FIELD

The disclosed embodiments relate generally to techniques for modeling fracturing in subsurface formations during enhanced hydrocarbon recovery operations.

### BACKGROUND

Microseismic depletion delineation (MDD) is a promising tool for monitoring stimulated rock volume (SRV) in hydrocarbon reservoirs during enhanced recovery operations. It has been demonstrated in the field and numerically in 2D. However, no fully coupled poro-elastic MDD numerical study has been conducted in 3D because of the significant computational cost requirement.

There exists a need for a computationally feasible methods for 3D fully coupled quasi-static poro-elastic finite difference modeling and 3D microseismic depletion delineation in order to more accurately understand fracturing of and production from the hydrocarbon reservoir. Reference may be made to any of the following:
WENZLAU F ET AL, "Finite-difference modeling of wave propagation and diffusion in poroelastic media", GEOPHYSICS, SOCIETY OF EXPLORATION GEOPHYSICISTS; This document discloses a finite-difference scheme that simulates waves within poroelastic media as described by Biot's theory;
MASSON Y J ET AL, "Finite-difference modeling of Biot's poroelastic equations across all frequencies", GEOPHYSICS, SOCIETY OF EXPLORATION GEOPHYSICISTS; SOBHANIARAGH B ET AL, "Three-dimensional investigation of multiple stage hydraulic fracturing in unconventional reservoirs", JOURNAL OF PETROLEUM SCIENCE AND ENGINEERING;
KAMALI AMIRHOSSEIN ET AL, "On the Role of Poroelasticity in the Propagation Mode of Natural Fractures in Reservoir Rocks"; and
US 2020/0284945, which relates to method and alarming system for CO2 sequestration.

### SUMMARY

The present invention is defined by the appended independent claims, to which reference may now be made. Specific embodiments are defined in the dependent claims.

### BRIEF DESCRIPTION OF THE DRAWINGS

Figure 1 illustrates an example system for poro-elastic modeling and microseismic depletion delineation;
Figure 2 illustrates a method for monitoring stimulated reservoir volumes (SRV);
Figure 3 illustrates an aspect of poro-elastic modeling; and
Figure 4 illustrates an example of a subsurface volume containing fractures;
Figure 5 illustrates an example of a subsurface volume containing fractures;
Figure 6 illustrates a result of an embodiment of the present invention;
Figure 7 illustrates a result of an embodiment of the present invention; and
Figure 8 illustrates a result of an embodiment of the present invention.

Like reference numerals refer to corresponding parts throughout the drawings.

### DETAILED DESCRIPTION OF EMBODIMENTS

Described below are methods, systems, and computer readable storage media that provide a manner of fast 3D fully coupled quasi-static poro-elastic finite difference modeling (FDM) for simulating 3D microseismic depletion delineation (MDD). The novel modeling method can be utilized as the engine for inversion which will improve future efforts to estimate fracture system geometries, properties and localized changes in the stress field.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

The present invention is a novel method for fast 3D fully coupled quasi-static poro-elastic finite difference modeling for simulating 3D MDD. Oilfield parameters from a real field are used to investigate the mechanics of the MDD process and illustrate the conditions for the MDD success. The novel modeling method can be utilized as the engine for inversion which will improve future efforts to estimate fracture system geometries, properties and localized changes in the stress field.

This disclosure is divided into two parts. In the first part, we develop a new fast 3D fully coupled poro-elastic modeling method for simulating temporal quasi-static displacements, stresses, strains, and fluid flow velocities. We provide the mathematical derivation of the new method which is based on a rescaling of the solid rock and the fluid flow density parameters. In the second part, we use the developed fast fully coupled 3D poroelastic modeling to compute MDD; in one example, this is done for a 1000-day depletion followed by 100-day re-injection. The MDD is modeled in the presence of the stimulated and natural fractures with the depletion/reinjection well located at the center of the three-dimensional volume. During the monitoring time steps, we compute Mohr-Coulomb (MC) failure criteria that provides an indication about existence or lack of fracture failure generation.

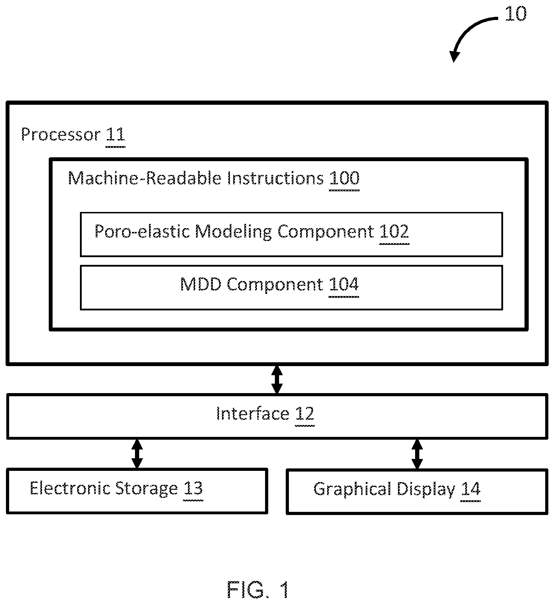

The methods and systems of the present disclosure may be implemented by a system and/or in a system, such as a system 10 shown in FIG. 1. The system 10 may include one or more of a processor 11, an interface 12 (e.g., bus, wireless interface), an electronic storage 13, a graphical display 14, and/or other components. Processor 11 executes machine-readable instructions to calculate 3D microseismic depletion delineation (MDD) numerical experiments for stimulated rock volume (SRV) estimation using a finite difference method for simulating fast fully coupled 3D quasi-static poro-elasticity in fractured rock.

The electronic storage 13 may be configured to include electronic storage medium that electronically stores information. The electronic storage 13 may store software algorithms, information determined by the processor 11, information received remotely, and/or other information that enables the system 10 to function properly. For example, the electronic storage 13 may store information relating to parameters characterizing a subsurface volume of interest, and/or other information. The electronic storage media of the electronic storage 13 may be provided integrally (*i.e*., substantially non-removable) with one or more components of the system 10 and/or as removable storage that is connectable to one or more components of the system 10 via, for example, a port (*e.g.,* a USB port, a Firewire port, *etc.)* or a drive (*e.g.,* a disk drive, *etc.*)*.* The electronic storage 13 may include one or more of optically readable storage media (*e.g.,* optical disks, *etc.),* magnetically readable storage media (*e.g.,* magnetic tape, magnetic hard drive, floppy drive, *etc.*)*,* electrical charge-based storage media (*e.g.,* EPROM, EEPROM, RAM, *etc.*), solid-state storage media (*e.g.,* flash drive, *etc.*), and/or other electronically readable storage media. The electronic storage 13 may be a separate component within the system 10, or the electronic storage 13 may be provided integrally with one or more other components of the system 10 (*e.g.,* the processor 11). Although the electronic storage 13 is shown in FIG. 1 as a single entity, this is for illustrative purposes only. In some implementations, the electronic storage 13 may comprise a plurality of storage units. These storage units may be physically located within the same device, or the electronic storage 13 may represent storage functionality of a plurality of devices operating in coordination.

The graphical display 14 may refer to an electronic device that provides visual presentation of information. The graphical display 14 may include a color display and/or a non-color display. The graphical display 14 may be configured to visually present information. The graphical display 14 may present information using/within one or more graphical user interfaces. For example, the graphical display 14 may present information relating to fracture modeling, stimulated reservoir volume, and/or other information.

The processor 11 may be configured to provide information processing capabilities in the system 10. As such, the processor 11 may comprise one or more of a digital processor, an analog processor, a digital circuit designed to process information, a central processing unit, a graphics processing unit, a microcontroller, an analog circuit designed to process information, a state machine, and/or other mechanisms for electronically processing information. The processor 11 may be configured to execute one or more machine-readable instructions 100 to facilitate 3D fully coupled poro-elastic modeling and microseismic depletion delineation. The machine-readable instructions 100 may include one or more computer program components. The machine-readable instructions 100 may include a poro-elastic modeling component 102, a microseismic depletion delineation (MDD) component 104, and/or other computer program components.

It should be appreciated that although computer program components are illustrated in Figure 1 as being co-located within a single processing unit, one or more of computer program components may be located remotely from the other computer program components. While computer program components are described as performing or being configured to perform operations, computer program components may comprise instructions which may program processor 11 and/or system 10 to perform the operation.

While computer program components are described herein as being implemented via processor 11 through machine-readable instructions 100, this is merely for ease of reference and is not meant to be limiting. In some implementations, one or more functions of computer program components described herein may be implemented via hardware (e.g., dedicated chip, field-programmable gate array) rather than software. One or more functions of computer program components described herein may be software-implemented, hardware-implemented, or software and hardware-implemented.

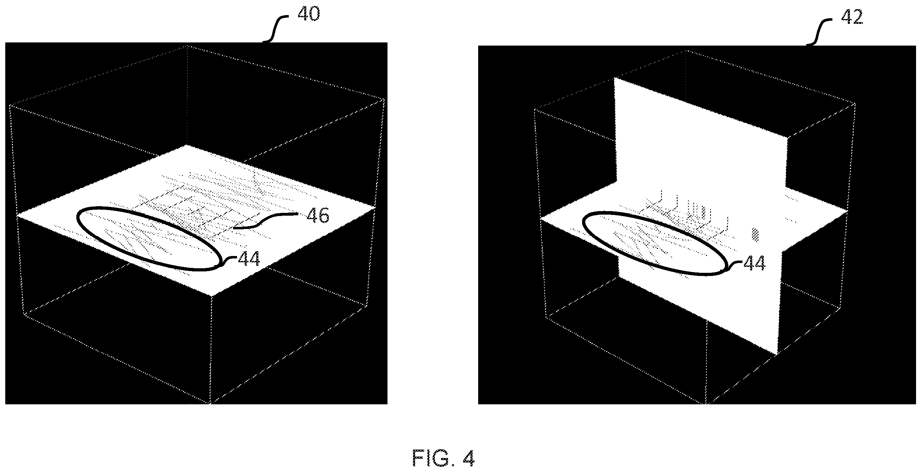

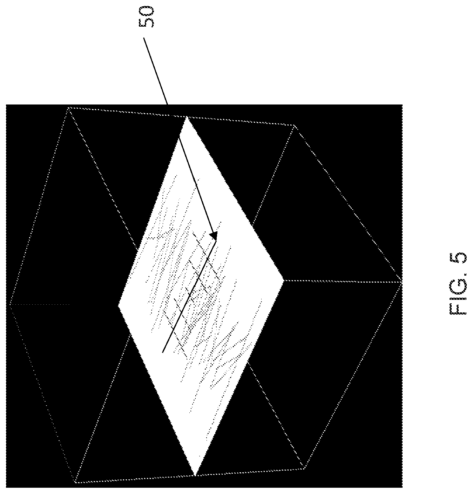

Referring again to machine-readable instructions 100, the poro-elastic modeling component 102 is configured to perform 3D fully coupled quasi-static poro-elastic finite difference modeling. The modeling may be computed for depletion followed by reinjection. Poro-elastic component 102 implements quasi-static poro-elastic equations (see Fig. 5) that are derived from the known equations for fully coupled 3D poro-elasticity (see Fig. 4). This may be used for simulating temporal quasi-static displacements, stresses, strains and fluid flow velocities. The new method is based on a rescaling of the solid rock and the fluid flow density parameters. By scaling the density terms and keeping the elastic moduli, we change to stability conditions that allow us to model the quasi-static response with a large simulation time step.

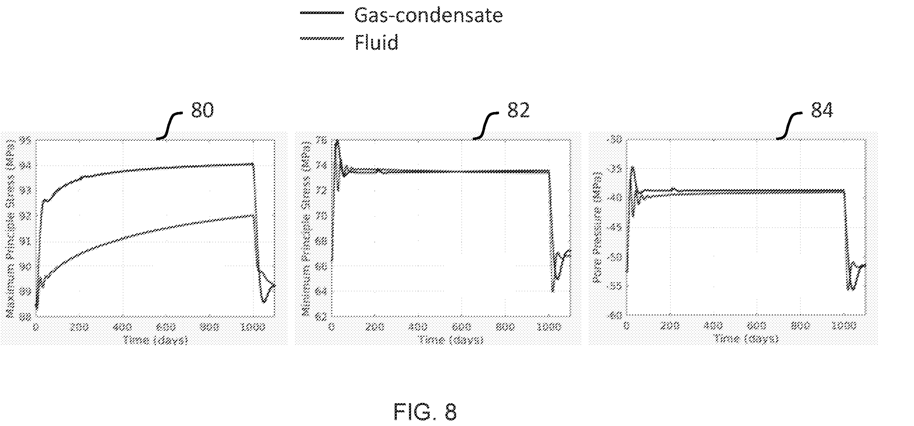

The microseismic depletion delineation (MDD) component 104 may be configured to model the stimulated reservoir volume (SRV). MDD component 104 takes as input the modeling results from poro-elastic modeling component 102. MDD component 104 uses the 3D poro-elastic modeling to compute MDD. The example shown in Figure 8 computes the changing MDD during 1000-day depletion followed by 100-day re-injection. The MDD is modeled in the presence of the stimulated and natural fractures with the depletion/reinjection well located at the center of the three-dimensional volume. During the monitoring time steps, the Mohr-Coulomb (MC) failure criteria is computed to provide an indication about existence or lack of fracture failure generation.

The description of the functionality provided by the different computer program components described herein is for illustrative purposes, and is not intended to be limiting, as any of computer program components may provide more or less functionality than is described. For example, one or more of computer program components may be eliminated, and some or all of its functionality may be provided by other computer program components. As another example, processor 11 may be configured to execute one or more additional computer program components that may perform some or all of the functionality attributed to one or more of computer program components described herein.

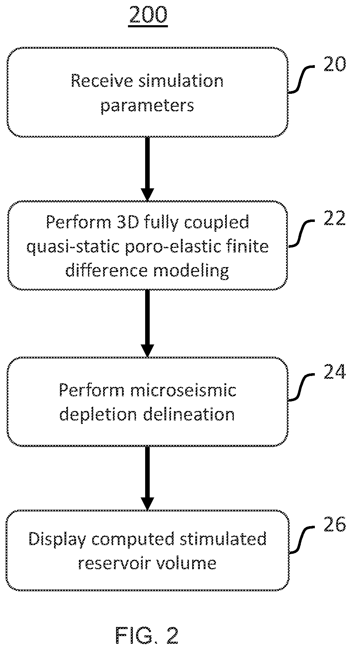

Figure 2 illustrates an example method 200 for monitoring a stimulated reservoir volume. At step 20, the method receives simulation parameters. These simulation parameters are used for step 22, performing 3D fully coupled quasi-static poro-elastic finite difference modeling. The output of the finite difference is the simulation of the 3D fully coupled fields between stress tensor, strain tensor, pore pressure, particle displacement vector, and fluid flow vector. This approach has three main advantages over the conventional methods. First, this method uses an explicit finite difference scheme that permits computation of large 3D models without a significant computation effort compared to the implicit methods that require matrix construction and inversion. Second, by scaling rock-solid and fluid densities, we preserve numerical stability condition that allows us to perform the simulation using a large time-step over large simulation times. Third, this finite difference produces the fully coupled fields mentioned above, that encompass the physical phenomena that does not exist when decoupled simulation is performed.

To develop the quasi-static fully coupled poro-elastic equations, we start with Biot's dynamic equations that can be described by the following four first-order in time partial differential equations. The first equation is the generalized Darcy's law: ${ρ}_{f} \left(1+Φ\right) F \frac{\partial q}{\partial t} + \frac{η}{{k}_{0}} q = - ∇ p - {ρ}_{f} \frac{\partial v}{\partial t}$ (1) The second equation is the conservation of linear momentum: $ρ \frac{\partial v}{\partial t} = ∇ ⋅ τ - {ρ}_{f} \frac{\partial q}{\partial t}$ (2) The third equation is the stress-strain constitutive law for an isotropic porous material: $\frac{\partial τ}{\partial t} = \left({λ}_{u}∇⋅v+αM∇⋅q\right) I + μ \left[∇v+{\left(∇v\right)}^{T}\right]$ (3) The fourth equation is the pressure constitutive law derived from the conservation of mass: $- \frac{\partial p}{\partial t} = M \left(α∇⋅v+∇⋅q\right)$ (4) The descriptions of the variables and material properties in equations (1) - (4) are given in the table of variables at the end of the Detailed Description.

The propagation time step Δ*t* of the discretized equation is determined by the Courant stability condition: $Δ t \leq \frac{Δ x}{2 {V}_{P}} = \frac{Δ x}{2} \sqrt{\frac{ρ}{{λ}_{u} + 2 μ}}$ (5)
where ${V}_{P} = \sqrt{\frac{{λ}_{u} + 2 μ}{ρ}}$ is the P-wave speed associated with fast P-wave. Equation 5 implies that $Δ t ∝ \sqrt{ρ}$. That means that increasing the rock-solid density by the scaling parameter γ will increase the time step as $Δ t \sqrt{γ}$ while keeping the Courant stability condition unchanged. By scaling the rock solid and fluid densities, *ρ* and *ρ_{f},* by a large number (e.g., *γ* = 10⁶), we will show that we effectively convert the poro-elastic dynamic wave equation into quasi-static poro-elastic equation that can run with a large time step. Here, we use the term quasi-static to refer to time scales where the deformations associated with propagating elastic waves are considered negligible in amplitude relative to the geomechanical deformations. To show this, we insert equation (2) into equation (1), reorganize the equation, and obtain $\frac{\partial q}{\partial t} = \frac{- 1}{{ρ}_{f} \left[\left(1+Φ\right)F-\frac{{ρ}_{f}}{ρ}\right]} \left(\frac{η}{{k}_{0}}q+∇p+\frac{{ρ}_{f}}{ρ}∇⋅τ\right)$ (6) and substitution of equation (6) into equation (2) yielding $\frac{\partial v}{\partial t} = \frac{1}{ρ} \left(∇⋅τ-\left(\frac{η}{{k}_{0}}q+∇p+\frac{{ρ}_{f}}{ρ}∇⋅τ\right)\right)$ (7)

Equations (6) and (7) are inversely proportional to *ρ_{f}* and *ρ,* respectively. Thus, by multiplying *ρ* and *ρ_{f}* with increasing the density scaling parameter γ >> 1, *γρ_{f}* and *γρ* become large, making the fluid and solid accelerations effectively zero (i.e., $\frac{\partial q}{\partial t} \approx 0$ and $\frac{\partial v}{\partial t} \approx 0$, respectively) so equations (1) - (4) with *γρ_{f}* and *γρ* become: $\frac{η}{{k}_{0}} q = - ∇ p$ (8) $∇ ⋅ τ \approx 0$ (9) $\frac{\partial τ}{\partial t} = \left({λ}_{u}∇⋅v+αM∇⋅q\right) I + μ \left[∇v+{\left(∇v\right)}^{T}\right]$ (10) $- \frac{\partial p}{\partial t} = M \left(α∇⋅v+∇⋅q\right)$ (11)

The density-scaled equations (8)-(11) can be used to efficiently simulate fully coupled quasi-static poro-elasticity because the Courant stability condition in equation (5) has an enlarged simulation time step. Note that these equations do not depend on the solid and fluid density parameters. Equation (8) is the standard Darcy's law, and equation (9) is the equilibrium equation for elasto-static problems. Equations (10) and (11) are the same as equations (3) and (4). Physically, by applying density scaling we are decreasing both the fast Biot's waves. The characteristic frequencies of the slow Biot's wave are also reduced and will be analyzed in the section on the density scaling limits and will be shown in the first synthetic example below. Note that if we set the fluid velocity and pressure to zero (i.e., q=0, *p=0)* in equations (1) - (4), we obtain a quasi-static elasticity modeling that contains scaling of the rock density only.

Each of the equations (1) - (4) are discretized for computing **q, v, τ** and *p*, respectively. The full temporal spatial discretization of these equations employs a leapfrog in time and staggered grid in space finite difference time domain scheme. For the sake of simplicity, we indicate the temporal discretization only with time index n, ${q}_{n + \frac{1}{2}} = \frac{1}{{a}_{1} - {a}_{2}} \left[\left({a}_{1}+{a}_{2}\right){q}_{n - \frac{1}{2}}+{\left(∇⋅τ\right)}_{n}+\frac{γρ}{{γρ}_{f}}{\left(∇p\right)}_{n}\right]$ (12) ${v}_{n + \frac{1}{2}} = {v}_{n - \frac{1}{2}} + \frac{Δ t}{γρ} \left[{\left(∇⋅τ\right)}_{n}-{γρ}_{f}{\left(\frac{\partial q}{\partial t}\right)}_{n}\right]$ (13) ${τ}_{n + 1} = {τ}_{n} + Δ t \left\{\left[{λ}_{u}{\left(∇⋅v\right)}_{n + \frac{1}{2}}+αM{\left(∇⋅q\right)}_{n + \frac{1}{2}}\right]I+μ\left[{\left(∇v\right)}_{n + \frac{1}{2}}+{\left(∇v\right)}_{n + \frac{1}{2}}^{T}\right]\right\}$ (14) ${p}_{n + 1} = {p}_{n} - M Δ t \left[α{\left(∇⋅v\right)}_{n + \frac{1}{2}}+{\left(∇⋅q\right)}_{n + \frac{1}{2}}\right]$ (15) where ${a}_{1} = \frac{γ}{Δ t} \left[{ρ}_{f}-\left(1+Φ\right)Fρ\right]$ and ${a}_{2} = \frac{ηγρ}{2 {k}_{0} {γρ}_{f}}$*.*

Density scaling for the purpose of efficient modeling of the quasi-static response is introduced in equations (12) - (15) by replacing *ρ_{f}* and *ρ* with *γρ_{f}* and *γρ,* respectively. Note that the second term on the right-hand side of equation (13) and the multiplier in *a*₁ do not vanish when the density scaling is increased because the time step Δ*t* is also increased.

Because the introduction of the density scaling parameter is modifying the physics of the fully coupled poro-elastic modeling equations, it is important to understand if non-physical artifacts are being generated, particularly as the density scaling *γ* is increased. As noted above, the scaling increases the density, thereby decreasing the speed of the propagating waves, and attenuating the solid and fluid accelerations, effectively transforming the dynamic poro-elastic response into a quasi-static response. Another part of the dynamic poro-elastic physics that is affected by *γ* is the characteristic frequency *f_{c}* that defines the transition of the fluid from a relaxed state at low frequencies to an unrelaxed state at high frequencies ${f}_{c} = \frac{η}{{ρ}_{f} {k}_{0} \left(1+Φ\right) F}$

Biot's poro-elastic equations predict compressional and shear fast waves and a slow compressional wave. The slow wave is purely diffusive at the frequencies lower than the characteristic frequencies. At frequencies above the critical frequency, the slow wave is propagative (i.e., no longer purely diffusive) and is characterized by a higher amplitude and shorter wavelength because of its lower velocity than the fast Biot's compressional wave. By scaling the fluid density with *γρ_{f}, γ* » 1, the critical frequency decreases and shrinks the diffusive range of the Biot's slow wave. Since we are interested in the quasi-static response, the appearance of the propagating Biot's slow wave is undesirable because this wave has a non-negligible amplitude. To limit the range of the propagating Biot's slow wave, we set the following criterion: ${f}_{c}^{γ} = \frac{η}{{γρ}_{f} {k}_{0} \left(1+Φ\right) F} \geq \frac{\frac{1}{4}}{2 π Δ {t}_{γ}}$ where $Δ {t}_{γ} = Δ t \sqrt{γ}$ is the simulation time step. This criterion assures that during the simulation, we do not generate a propagating Biot's slow wave, and compute solely the quasistatic response of the relaxed state at low frequency. To provide clarity on the upper limit of *γ* for the simulation time step Δ*t_{γ}* that is free of the Biot's slow waves, we isolate *γ* in equation 16 on the left side, and obtain $γ \leq {\left(\frac{2 πη Δ t}{\left(1/4\right) {ρ}_{f} {k}_{0} \left(1+Φ\right) F}\right)}^{2} .$ The right-hand side of this equation, controlled solely by the rock and fluid properties, defines the upper possible limit of the scaling parameter *γ*. For example, rocks with extremely low permeability or fluids with high viscosity set a high limit for *γ*. By scaling the density terms and keeping the elastic moduli, we change to stability conditions that allow us to model the quasi-static response with a large simulation time step.

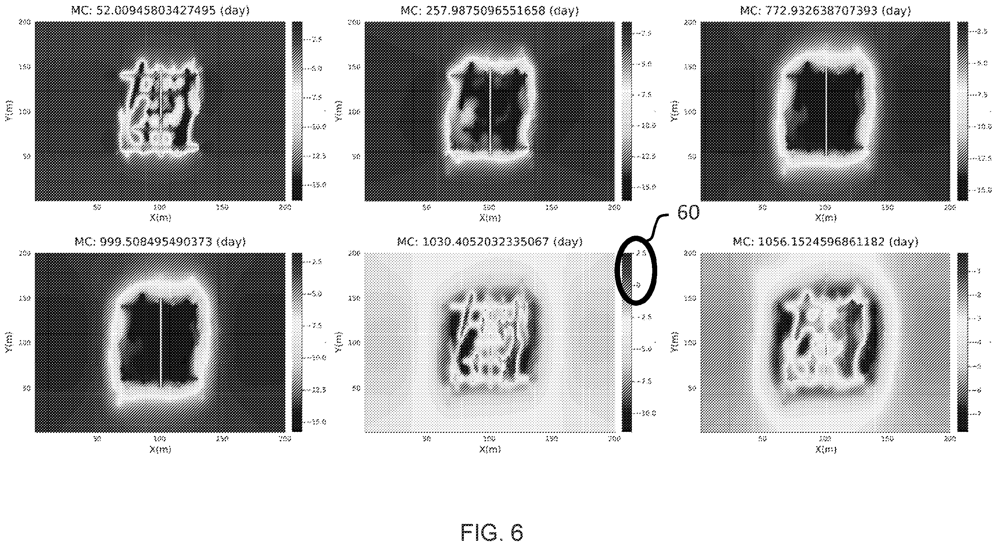

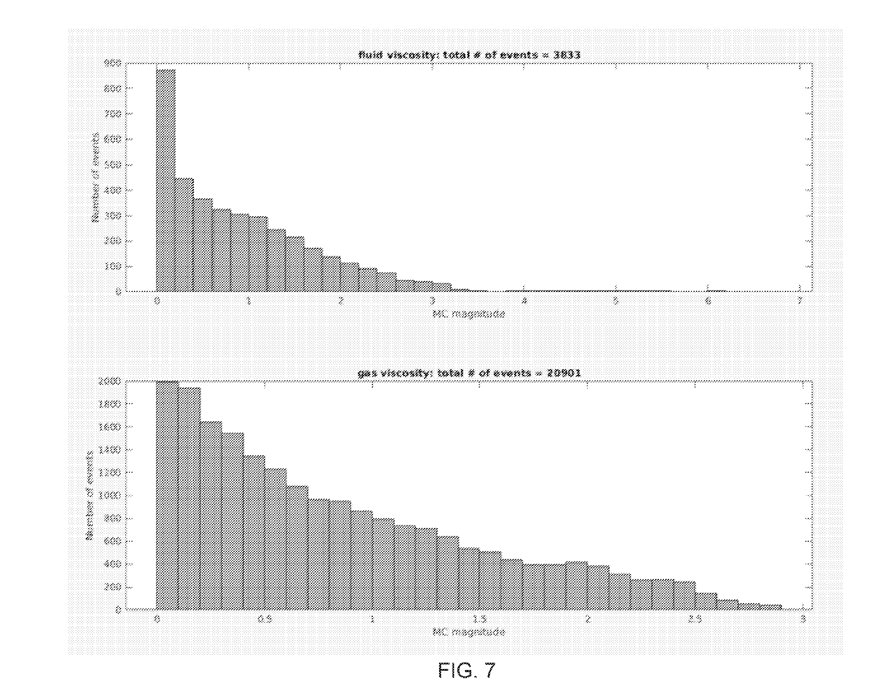

The modeling results of step 22 are used by step 24 to perform microseismic depletion delineation (MDD). The primary output of the finite difference that is used for MDD is the simulated temporal stresses along all three directions and the coupled pore pressure. We first rotate the stresses along the principal directions, and then compute the temporal Mohr-Coulomb (MC) failure criteria from the principal stresses and the pore pressure (Fig 6 & 7). The positive values of MC indicate micro-seismic activity that define the micro-seismic depleted delineated (MDD) zone. The results of the MDD are displayed on a graphical display at step 26.

To simulate the MDD process, we compute the fully coupled quasistatic poro-elastic response of a discrete fracture network subjected to constant stress boundary conditions. In the first stage of the simulation, depletion is carried out for 1000 days. We will show that the stresses surrounding the fractures change during the depletion process. In the second stage, fluid injection is performed. We model these two stages in a single continuous simulation. The only parameters that are changed during the transition from the depletion to the injection are the pore pressure at the well and the fluid viscosity.

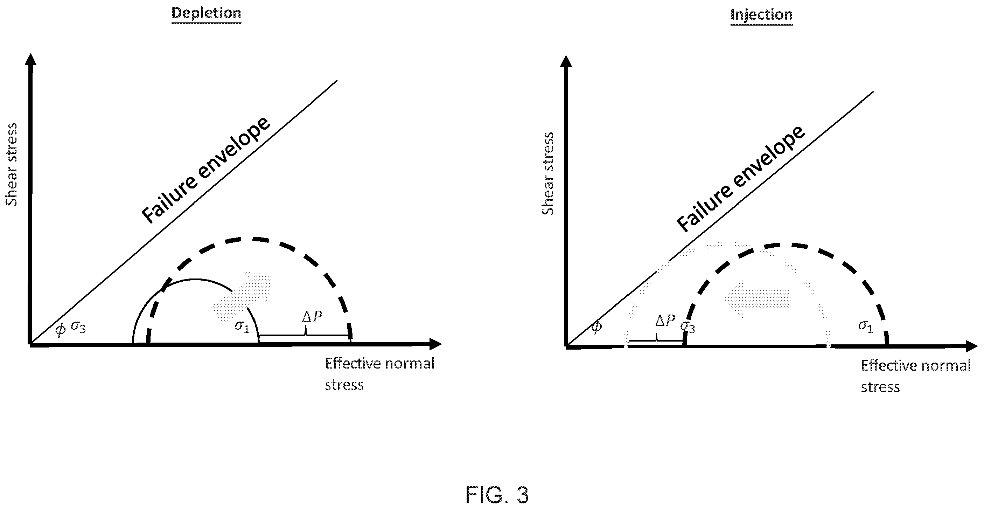

During both the depletion and injection, we compute the 3D Mohr-Coulomb (MC) failure criterion to determine if shear slip is possible at all points in the computational domain. This criterion is computed by rotating the computed six-component stresses, **τ**, from the finite difference simulation into three-component principal directions, ${σ}^{tot} = \left({σ}_{1}^{tot}, {σ}_{2}^{tot}, {σ}_{3}^{tot}\right)$ where we define $\left({σ}_{1}^{tot}, {σ}_{2}^{tot}, {σ}_{3}^{tot}\right)$ to be the maximum, intermediate, and minimum principal stresses, respectively. The MC failure criterion is given as $MC = \frac{1}{2} \left[\left({σ}_{1}-{σ}_{3}\right)\sqrt{1 + {μ}^{2}}-\left({σ}_{1}+{σ}_{3}\right)μ\right] - C > 0$
where the effective stresses are defined as ${σ}_{1} = {σ}_{1}^{tot} - p$ and ${σ}_{3} = {σ}_{3}^{tot} - p$, and µ and C are MC failure-envelope and cohesion (intercept with the shear stress axis in as shown in Figure 3), respectively. Figure 3 shows a schematic describing a conceptual geomechanical model for MDD in the presence of a single fracture with the MC semi-circle during the two stages. During the depletion stage the reservoir pore pressure decreases, and the maximum effective normal stress increases. In the graph on the left, MC moves away from the failure envelope while the diameter increases. The solid black and dotted line indicate the in-situ and depleted conditions, respectively. During the injection stage of fluids such as liquid water or various gas condensates, the pore pressure increases and the effective normal stress decreases. The MC semi-circle moves towards the failure envelop as marked with the blue dotted line and arrow on the right of Figure 3. Once the MC semi-circle intersects the failure envelope, it generates shear slip failure that potentially becomes a microseismic source. The spatial distribution of the located microseismic events determine the depleted reservoir volume (DRV). This conceptual model describes the geomechanical behavior in the presence of a single fracture. In the presence of network of fractures, however, this behavior might not necessarily be satisfied because of stress heterogeneity. Thus, 3D fully coupled poro-elastic modeling of the MDD process is important to better understand the role of the controlling parameters, e.g., rock and fracture properties, fracture network geometry, in situ stress state, and fluid pressures and flow rates.

The summary of the workflow for fully coupled fluid-geomechanical modeling for MDD is:
- Set the model with lithology parameters and the initial conditions with background in-situ stresses and pore pressure
- Set the fluid viscosities for depletion and injection.
- Run the 3D fully coupled quasistatic poro-elastic finite difference modeling with scaled rock solid and fluid densities to compute the stress tensor and pore pressure.
- During each step of the finite difference simulation, compute the principal stress components, and compute MC shear failure criterion for shear failure as a proxy for microseismicity generation.

A synthetic example of performing method 200 is shown in Figures 4 - 8. In Figure 4, the synthetic permeability is shown for a single depth slice 40 and the same depth slice with a vertical plane 42. The assorted grey lines such as those in oval 44 represent natural fractures. The black parallel lines 46 represent fractures related to a well bore. Figure 5 shows the wellbore location 50. This well is used for depletion (production of hydrocarbons) and injection (enhanced oil recovery by gas or fluid). In this example, there are 1000 days of depletion followed by 100 days of injection with a liquid fluid. These are merely examples; there may be any number of days of depletion, any number of days of injection, and the injection fluid may be a liquid or a gas or some combination such as a gas-condensate fluid.

Figure 6 is a graphical representation of a result of method 200. Each panel shows the same depth slice as Figure 4 but the shades of grey represent the Mohr-Coulomb (MC) failure criteria as measured from day 52, day 258, day 773, day 999, day 1020, and day 1056. The units of MC are MPa. The positive and negative magnitudes indicate the existence and lack of fracture failure occurrence, respectively. The failures observed at day 1020 occurs along the intersection between natural and stimulated fractures. Note the ellipse 60 shows the grey level of the failure occurrences. Although Figure 6 illustrates the graphical representation of the computed MC failure criteria, the method 200 also calculates the maximum principal horizontal stress, minimum principal horizontal stress, and pore pressure. Each of these can also be displayed as a graphical representation.

Figure 7 is a graphical representation of histograms of the positive MC stresses which are also computed as an output of method 200. This highlights the number of microseismic events and absolute magnitudes released during the injection stage of liquid (top) and gas-condensate (bottom). The units are given in MPa. Note that the injected gas-condensate generates more events however with smaller MC magnitudes than the liquid.

Figure 8 shows more options for graphical representations of the results of method 200. The three graphs show the maximum principal stress 80, minimum principal stress 82, and pore pressure 84 for the experiment described above with 1000 days of depletion and 100 days of injection, where the black line shows the result for injection with gas-condensate and the grey line shows the result for injection with a liquid fluid.

We have described an efficient approach based on solid rock and fluid density scaling for fully coupled quasi-static poro-elasticity modeling using a finite difference approach. We have demonstrated how this scaling modifies the fast and slow Biot's waves and provided guidance on the range over which the scaling parameter can provide accurate results. Using this approach, we carried out 3D simulations of the MDD process for a fractured reservoir using liquid and gas fluids. These simulations are able to carry out long time scale depletion simulations that would be impractical with conventional fully coupled quasi-static poro-elastic simulators.

The methods described above may be applied to monitoring unconventional reservoirs. In particular, geophysical surveillance during enhanced oil recovery (EOR) has the potential to delineate the distribution of the gas along and away from the lateral wellbore. The injection is planned to preserve a bottom hole pressure that is below the virgin reservoir pressure therefore the injected gas should be confined to the depleted areas which means successful geophysical imaging could provide insight on secondary and primary recovery efficiency.

The monitoring requires 4D (i.e., time-lapse) modeling tools able to evaluate the sensitivity of P-wave velocity to the cycles of gas injection and fluid production and the creation of new geomechanical modeling tools to assess shear failure potential due to injection into a depleted fracture network up to bottom hole pressures that are below the virgin fracture gradient, as disclosed above. The investigation and integration of geological, geomechanical, engineering, and geophysical elements show the potential for changes in P-wave velocity and shear failure potential within the depleted region due to continuous gas injection (CGI). These tools could be applied to EOR and drained rock volume estimation projects.

The acquisition design alternatives include a shallow buried microseismic array and surface to borehole distributed acoustic sensing (DAS) time-lapse vertical seismic profiling (VSP). The DAS fiber could also be used to supplement microseismic event detection, to measure strain from gas injection in an adjacent wellbore and as a production/injection log to reveal the relative distribution of gas along the wellbore. An alternative to DAS would include an array of geophones. An additional design is a crosswell time-lapse seismic.

While particular embodiments are described above, it will be understood it is not intended to limit the invention to these particular embodiments. It should be understood that various changes and improvements could be made hereto without departing from the scope of the invention, as defined by the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Table of variables**

| | |
|---|---|
| **v** | Particle velocity vector |
| **τ** | Stress tensor |
| **q** | Darcy's fluid flow vector |
| *p* | Pore pressure |
| ρ | Rock solid density |
| ρ*_{f}* | Fluid density |
| $\frac{\partial }{\partial t}$ | Time derivative |
| η | Dynamic viscosity |
| *k₀* | Zero-frequency permeability |
| Φ | Porosity |
| *ζ* | Tortuosity |
| (1+ Φ)*F*=1.25 *ζ*/Φ | Non-zero frequency scaling of the permeability |
| *α* | Biot's coefficient |
| *M* | Fluid storage coefficient |
| µ | Shear modulus |
| *K*_{d} | Drained bulk modulus |
| ${λ}_{u} = {K}_{d} + {α}^{2} M - \frac{2 μ}{3}$ | Undrained Lamé modulus |
| ∇, ∇ · | Gradient and divergence operators |
| *γ* | Density scaling parameter |

## Claims

1. A computer-implemented method (200) of poro-elastic modeling, comprising:
a. receiving (20) simulation parameters for a hydrocarbon reservoir volume, including lithology parameters, fluid viscosities for depletion and injection, and background in-situ stresses and pore pressure,
i. wherein the lithology parameters include dynamic viscosity η, fluid density ρ*_{f}*, zero-frequency permeability *k₀,* porosity Φ, tortuosity *ζ* and solid rock density ρ;
b. performing (22) 3D fully coupled quasi-static poro-elastic finite difference modeling using the simulation parameters, wherein the 3D fully coupled quasi-static poro-elastic finite difference modeling is based on a rescaling of the solid rock density ρ and the fluid density ρ*_{f}* using a density scaling parameter *γ*; and
c. using simulated temporal quasi-static stresses and pore pressures computed by the 3D fully coupled quasi-static poro-elastic finite difference modeling to perform 3D microseismic depletion delineation to understand fracturing of and production from the hydrocarbon reservoir volume,
wherein: $1 ≪ γ \leq {\left(\frac{2 πη Δ t}{\left(1/4\right) {ρ}_{f} {k}_{0} \left(1+Φ\right) F}\right)}^{2}$ where Δ*t* is a propagation time step and (1+ Φ)*F*=1.25 *ζ*/Φ.

2. The method of claim 1 wherein the simulation parameters further include one or more of Biot's coefficient, fluid storage coefficient, shear modulus, and drained bulk modulus.

3. The method of claim 1 further comprising generating a graphical representation of the simulated temporal quasi-static stresses and displaying the graphical representation on a graphical display.

4. The method of claim 1 further comprising generating a graphical representation of the simulated pore pressures and displaying the graphical representation on a graphical display.

5. A computer system (10), comprising:
one or more processors (11);
a memory (13); and
a graphical display,
wherein one or more programs are stored in the memory (13) and configured to be executed by the one or more processors (11), the one or more programs including instructions that when executed by the one or more processors (11) cause the system (10) to perform the computer-implemented method of any of claims 1 to 4.

6. One or more programs comprising instructions which, when executed by an electronic device (10) with one or more processors (11) and memory (13), cause the device to perform the computer-implemented method of any of claims 1 to 4.

7. A non-transitory computer readable storage medium storing the one or more programs of claim 6.

## Patentansprüche

1. Computerimplementiertes Verfahren (200) zur poroelastischen Modellierung, umfassend:
a. Empfangen (20) von Simulationsparametern für ein Kohlenwasserstoffreservoirvolumen, die Lithologieparameter, Fluidviskositäten für die Abreicherung und Injektion sowie In-situ-Hintergrundspannungen und Porendruck beinhalten,
i. wobei die Lithologieparameter dynamische Viskosität η, Fluiddichte ρ_{f}, Nullfrequenzpermeabilität k₀, Porosität Φ, Tortuosität ζ und Festgesteinsdichte ρ beinhalten;
b. Durchführen (22) von vollständig gekoppelter, quasistatischer poroelastischer, endlicher 3D-Differenzmodellierung unter Verwendung der Simulationsparameter, wobei die vollständig gekoppelte, quasistatische, poroelastische endliche 3D-Differenzmodellierung auf einer Neuskalierung der Festgesteinsdichte ρ und der Fluiddichte ρ_{f} unter Verwendung eines Dichteskalierungsparameters γ basiert; und
c. Verwenden von simulierten zeitlichen quasistatischen Spannungen und Porendrücken, die durch die vollständig gekoppelte, quasistatische, poroelastische, endliche 3D-Differenzmodellierung berechnet werden, um eine mikroseismische 3D-Abreicherungsabgrenzung durchzuführen, um die Rissbildung und die Gewinnung aus dem Kohlenwasserstoffreservoirvolumen zu verstehen,
wobei: $1 ≪ γ \leq {\left(\frac{2 πη Δ t}{\left(1/4\right) {ρ}_{f} {k}_{0} \left(1+Φ\right) F}\right)}^{2}$ wobei Δt ein Ausbreitungszeitschritt ist und (1 + Φ)F = 1,25 ζ/Φ.

2. Verfahren nach Anspruch 1, wobei die Simulationsparameter ferner eines oder mehrere von einem Biot-Koeffizienten, einem Fluidspeicherkoeffizienten, einem Schermodul und einem Dränage-Kompressionsmodul beinhalten.

3. Verfahren nach Anspruch 1, ferner umfassend Erzeugen einer grafischen Darstellung der simulierten zeitlichen quasistatischen Spannungen und Anzeigen der grafischen Darstellung auf einer grafischen Anzeige.

4. Verfahren nach Anspruch 1, ferner umfassend Erzeugen einer grafischen Darstellung der simulierten Porendrücke und Anzeigen der grafischen Darstellung auf einer grafischen Anzeige.

5. Computersystem (10), umfassend:
einen oder mehrere Prozessoren (11);
einen Speicher (13) und
eine grafische Anzeige,
wobei ein oder mehrere Programme in dem Speicher (13) gespeichert und dazu ausgelegt sind, von dem einen oder
den mehreren Prozessoren (11) ausgeführt zu werden, wobei das eine oder die mehreren Programme Anweisungen beinhalten, die bei Ausführung durch den einen oder die mehreren Prozessoren (11) das System (10) zum Durchführen des computerimplementierten Verfahrens nach einem der Ansprüche 1 bis 4 veranlassen.

6. Ein oder mehrere Programme, die Anweisungen umfassen, die bei Ausführung durch eine elektronische Vorrichtung (10) mit einem oder mehreren Prozessoren (11) und einem Speicher (13) die Vorrichtung zum Durchführen des computerimplementierten Verfahrens nach einem der Ansprüche 1 bis 4 veranlassen.

7. Nichtflüchtiges computerlesbares Speichermedium, das das eine oder die mehreren Programme nach Anspruch 6 speichert.

## Revendications

1. Procédé mis en œuvre par ordinateur (200) de modélisation poroélastique, le procédé comprenant les étapes suivantes :
a. recevoir (20) des paramètres de simulation pour un volume de réservoir d'hydrocarbures, y compris des paramètres lithologiques, des viscosités de fluide pour la déplétion et l'injection, ainsi que des contraintes in situ initiales et de pression de pore initiale,
i. où les paramètres lithologiques comprennent la viscosité dynamique η, la densité de fluide ρ_{f}, la perméabilité à fréquence nulle k₀, la porosité Φ, la tortuosité ζ et la densité de roche solide ρ ;
b. réaliser (22) une modélisation par différences finies, poroélastique, quasi-statique entièrement couplée 3D à l'aide des paramètres de simulation, où la modélisation par différences finies, poroélastique, quasi-statique entièrement couplée 3D est basée sur une mise à l'échelle de la densité de roche solide ρ et de la densité de fluide ρ_{f} en utilisant un paramètre de mise à l'échelle de densité γ ; et
c. utiliser des contraintes quasi-statiques temporelles simulées et des pressions de pore calculées par la modélisation par différences finies poroélastique quasi-statique entièrement couplée 3D pour réaliser une délimitation de la déplétion microsismique 3D afin de comprendre la fracturation du volume du réservoir d'hydrocarbures et la production à partir de ce volume, dans lequel : $1 ≪ γ \leq {\left(\frac{2 πη Δ t}{\left(1/4\right) {ρ}_{f} {k}_{0} \left(1+Φ\right) F}\right)}^{2}$ Δt est un pas de temps de propagation et (1+ Φ)F=1,25 ζ/ Φ.

2. Procédé selon la revendication 1, dans lequel les paramètres de simulation comprennent en outre un ou plusieurs éléments parmi un coefficient de Biot, un coefficient de stockage de fluide, un module de cisaillement et un module de volume drainé.

3. Procédé selon la revendication 1, comprenant en outre de générer une représentation graphique des contraintes quasi-statiques temporelles simulées et d'afficher la représentation graphique sur un écran d'affichage graphique.

4. Procédé selon la revendication 1, comprenant en outre de générer une représentation graphique des pressions de pore simulées et d'afficher la représentation graphique sur un écran d'affichage graphique.

5. Système informatique (10) comprenant :
un ou plusieurs processeurs (11) ;
une mémoire (13) ; et
un écran d'affichage graphique,
un ou plusieurs programmes étant stockés dans la mémoire (13) et configurés pour être exécutés par les un ou plusieurs processeurs (11), les un ou plusieurs programmes incluant des instructions qui, lorsqu'elles sont exécutées par les un ou plusieurs processeurs (11),
amènent le système (10) à exécuter le procédé mis en œuvre par ordinateur selon l'une quelconque des revendications 1 à 4.

6. Un ou plusieurs programmes comprenant des instructions qui, lorsqu'elles sont exécutées par un dispositif électronique (10) doté d'un ou plusieurs processeurs (11) et d'une mémoire (13), amènent le dispositif à exécuter le procédé mis en œuvre par ordinateur selon l'une quelconque des revendications 1 à 4.

7. Support de stockage non transitoire lisible par ordinateur stockant les un ou plusieurs programmes de la revendication 6.
